# EUROPEAN PATENT APPLICATION

(11) **EP 1 731 779 A1**
(43) Date of publication of application: **13.12.2006**
(21) Application number: 05727902.8
(22) Date of filing: 30.03.2005
(51) Int. Cl.: F16C 43/04, B60B 35/18, F16C 19/38, F16C 33/78

(54) **ASSEMBLING METHOD FOR BEARING DEVICE**

(30) Priority: 31.03.2004 JP 2004109237
(71) Applicant: JTEKT Corporation, Chuo-ku, Osaka-shi Osaka 542-8502 (JP)
(72) Inventor: TAKIMOTO, Masao c/o JTEKT Corporation, Osaka 542-8502 (JP)
(74) Representative: Steinmeister, Helmut
(86) International application number: PCT/JP2005/006074
(87) International publication number: WO 2005/095811

(57) **Abstract**

An annular seal (8), tapered rollers (4) and a retainer (6) are arranged on the outer peripheral surface on the flange section (21) side of an inner shaft (2) to form an inner shaft assembly (Kn). An annular spacer (10) capable of being split in the circumferential direction is arranged between the flange section (21) of the inner shaft (2) and the annular seal (8). With the annular spacer (10) supporting the annular seal (8), an outer ring (1) is pushed into the inner shaft assembly (Kn) to assemble the annular seal (8) to the outer ring (1), and then the annular spacer (10) is split and taken out.

## Description

### FIELD OF THE INVENTION

The present invention relates to a method of assembling a double row tapered roller bearing device (hereinafter, referred to as bearing device).

### DESCRIPTION OF THE RELATED ART

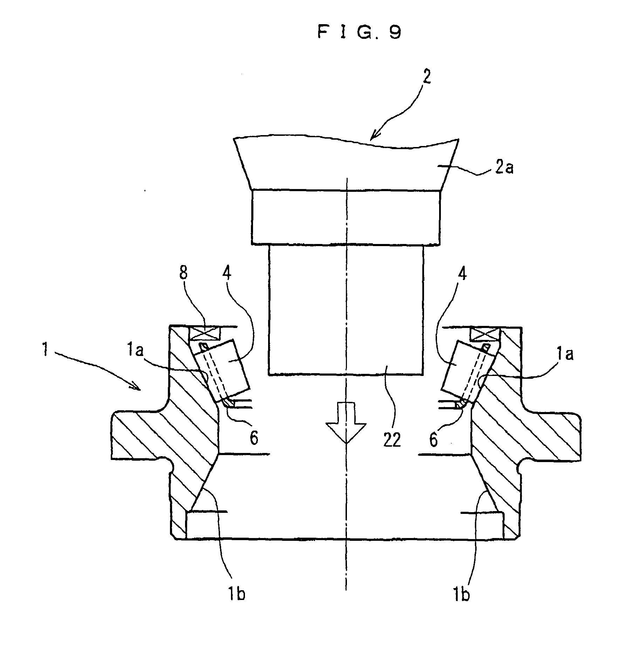

A bearing device for supporting a wheel with respect to a vehicle body under a free rotation is recited in the Patent Document 1. On the occasion of assembling the bearing device, first tapered rollers and a first retainer to be provided on a flange-side of an inner shaft are incorporated. As a conventional process in the assembling, as shown in Fig. 9, first tapered rollers 4 retained by a first retainer 6 are provided in a raceway 1a of an outer ring 1, and an annular seal 8 is attached to an end part of the outer ring 1. Thereafter, an inner shaft 2 is inserted into an inner-peripheral side of the outer ring 1 in the state where the first tapered rollers 4 and the first retainer 6 are retained in the raceway 1a of the outer ring 1. Thereby, the first tapered rollers 4 and the first retainer 6 are incorporated into between a raceway 2a of the inner shaft 2 and the raceway 1a of the outer ring 1.

In the foregoing method, however, the tapered rollers 4 easily slip out toward an inner-diameter side of the retainer 6, which causes a problem to be difficult to work. This is due to the following reason. The retainer which is generally used is adapted to retain the tapered rollers so as to prevent them from slipping out toward an outer-diameter side. Therefore, even though the tapered rollers thus constituted are fixed to the raceway-1a side of the outer ring 1 using a fastening tool, it is not possible to reliably prevent the tapered rollers 4 from slipping out toward the inner-diameter side of the retainer 6.

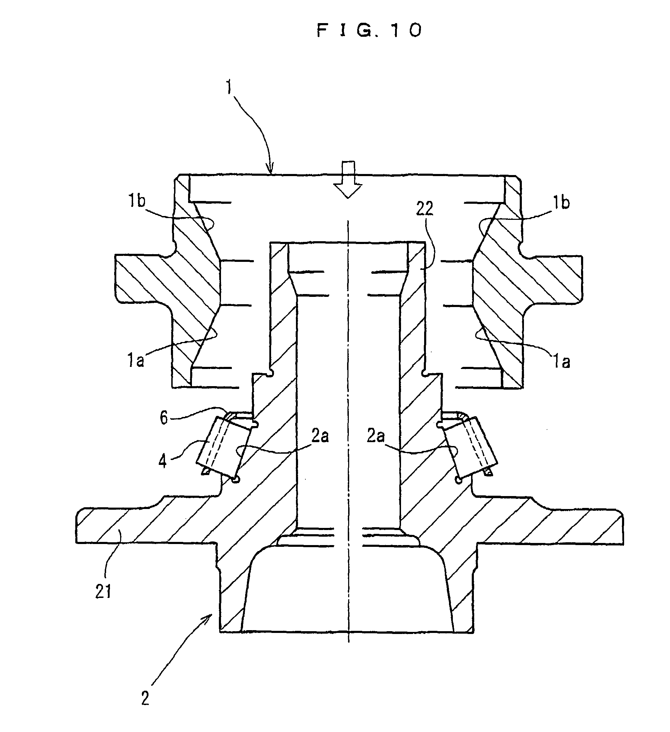

On the contrary, an approach is proposed that the first tapered rollers 4 and the first retainer 6 are provided in the raceway 2a of the inner shaft 2 as a first step as shown in Fig. 10. More specifically, the outer ring 1 is externally mounted on the inner shaft 2 in the state where the first tapered rollers 4 retained by the first retainer 6 are provided in the raceway 2a of the inner shaft 2. Thereby, the first tapered rollers 4 and the first retainer 6 are incorporated between the raceway 2a of the inner shaft 2 and the raceway 1a of the outer ring 1 on one side thereof. According to this method, the tapered rollers 4 are received by the raceway 2a of the inner shaft 2 provided on the inner-diameter side thereof, which eliminates the possibility that the tapered rollers 4 slip out during the operation.

However, it becomes difficult to attach the annular seal 8 to the end part of the outer ring 1 in the method in which the first tapered rollers 4 and the first retainer 6 are first provided in the raceway 2a of the inner shaft 2. More specifically, an inner diameter of the annular seal 8 to be attached to the end part of the outer ring 1 is generally smaller than a circumscribed circle diameter of the first tapered rollers 4. Therefore, in the case where the annular seal 8 is previously attached to the end part (lower-end part in Fig. 10) of the outer ring 1, the first tapered rollers 4 provided in the raceway 2a of the inner shaft 2 interfere with the insertion of the annular seal 8 when the outer ring is externally mounted on the outer periphery of the inner shaft 2.

In the constitution shown in Fig. 10, it is not possible to attach the annular seal 8 to the end part of the outer ring 1 after the outer ring 1 is externally mounted on the inner shaft 2 arranged with the first tapered rollers 4 and the first retainer 6.

Therefore, a method in which a supporting member is protruded from a substrate side which supports the inner shaft in an upright position so that a few circumferential positions in the annular seal can be supported by the supporting member was proposed as recited in the Patent Document 2 in order to attach the annular seal to the end part of the outer ring.
- Patent Document 1:No.: 2003-56570 of the Japanese Patent Applications Laid-Open
- Patent Document 2:No.: 2000-94902 of the Japanese Patent Applications Laid-Open

### DISCLOSURE OF THE INVENTION

### PROBLEMS TO BE SOLVED BY THE INVENTION

However, the method in which the supporting member is used involves such a risk that the annular seal may be tilted or distorted when it is attached to the outer ring because the annular seal is only partially supported. As it is necessary to form holes or an opening part for inserting through the supporting member in the flange of the inner shaft, it is inapplicable when the flange of the inner shaft has a disc shape where no holes are provided.

### MEANS FOR SOLVING THE PROBLEMS

In order to solve the foregoing problems, a method of assembling a bearing device according to the present invention is a method of assembling a bearing device comprising : a raceway on an outer peripheral surface on one axial side thereof; an inner shaft having a flange on the outer peripheral surface further toward the axial one side than the raceway; an outer ring inserted with respect to the inner shaft from an axial another side thereof and having a raceway facing the raceway on an inner peripheral surface thereof at the insertion position; and a plurality of tapered rollers provided under a free rolling between the raceways of the inner shaft and the outer ring, including: a first step in which an annular seal is attached to the outer peripheral surface of the inner shaft on the flange side thereof, and the tapered rollers and a retainer for the tapered rollers are provided in the raceway of the inner shaft so that an inner shaft assembled body consisting of the annular seal, the tapered rollers and the retainer is formed; a second step in which an annular spacer is provided between the flange and the annular seal so as to support the annular seal and in such a manner as circumferentially divided so as to be able to be removable; a third step in which the outer ring is inserted with respect to the inner shaft from the axial another side via the annular seal until the outer ring abuts the flange of the inner shaft; and a fourth step in which the annular spacer is split and removed from the bearing device.

According to the present invention, the tapered rollers and the retainer can be incorporated while the drop of the tapered rollers is prevented. Further, the annular seal can be easily attached to the end part of the outer ring by pressing the outer ring onto the annular seal with the annular spacer used as the receiving member of the annular seal. After the annular seal is attached, the annular spacer can be split and removed from the bearing device.

The annular spacer can be repeatedly used every time when the bearing device is assembled, which controls the increase of costs. The annular seal can adopt a conventional annular seal designed for attaching the outer ring, and does not demand any expensive annular seal and retainer having special structures, which also contributes to the control of the cost increase.

The annular spacer can support a substantially entire circumference of the annular seal, and the annular seal can be thereby fitted to the outer ring with substantially equal forces across the entire circumference. Therefore, such a risk that the annular seal may be tilted or distorted when it is attached to the outer ring can be alleviated. The annular spacer can be structurally to be split and removed radially outward after the annular seal is attached. Therefore, the annular spacer can be used even if the flange of the inner shaft has a disc shape where there are not any hole or opening part.

### EFFECT OF THE INVENTION

According to the present invention, the tapered rollers and the retainer can be incorporated on the flange side of the inner shaft and the annular seal can be attached to the outer ring without use of the annular seal and the retainer having any special structure. As a result, the bearing device can be assembled with substantially same costs as in the conventional technology.

### BRIEF DESCRIPTION OF THE DRAWINGS

Fig. 1 is an axially sectional view of a bearing device for describing a process of assembling a bearing device according to the present invention.
Fig. 2 is an axially sectional view of the bearing device in an assembling process subsequent to the process shown in Fig. 1.
Fig. 3 is an axially sectional view of the bearing device in an assembling process subsequent to the process shown in Fig. 2.
Fig. 4 is an enlarged sectional view of a part of Fig. 3.
Fig. 5 is a perspective view of an annular spacer used in the process shown in Fig. 3.
Fig. 6 is an axially sectional view of the bearing device in an assembling process subsequent to the process shown in Fig. 3.
Fig. 7 is an axially sectional view of the bearing device after the assembling process is completed.
Fig. 8 is an enlarged sectional view of a main part of a bearing device for describing an assembling method according to another preferred embodiment of the present invention.
Fig. 9 is an axially sectional view of a bearing device according to a conventional assembling method.
Fig. 10 is an axially sectional view of a bearing device according to another conventional assembling method.

### DESCRIPTION OF REFERENCE SYMBOLS

- 1: outer ring
- 2: inner shaft
- 2a: raceway
- 21: flange
- 4: first tapered roller
- 6: first retainer
- 8: first annular seal
- 10: annular spacer
- Kn: inner shaft assembled body

### PREFERRED EMBODIMENTS OF THE INVENTION

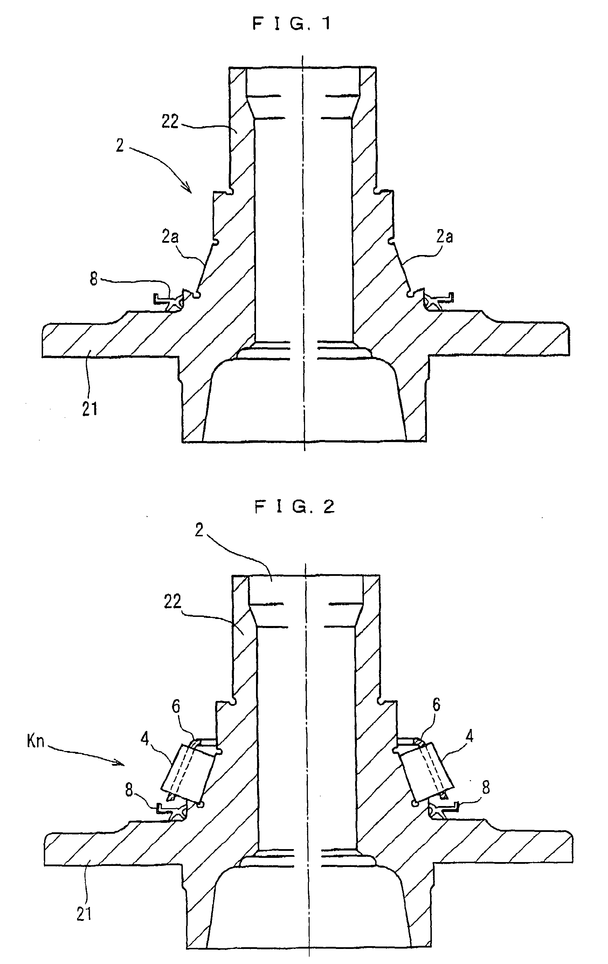

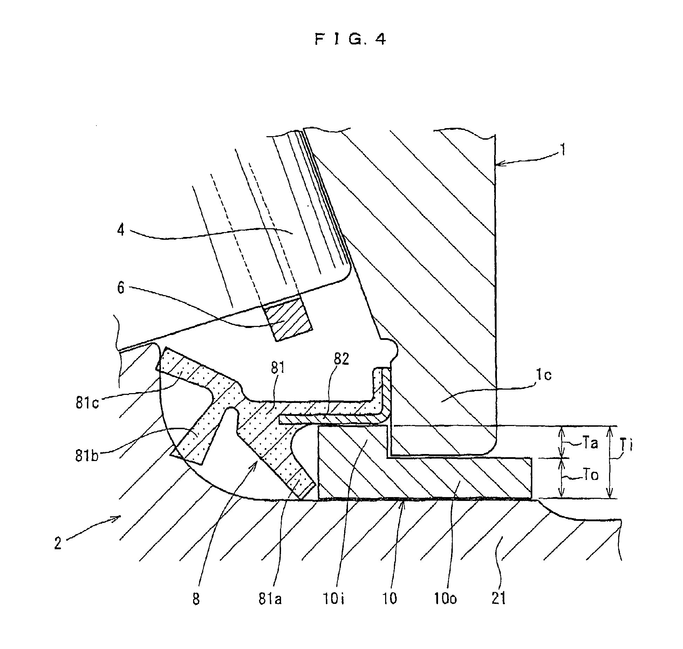

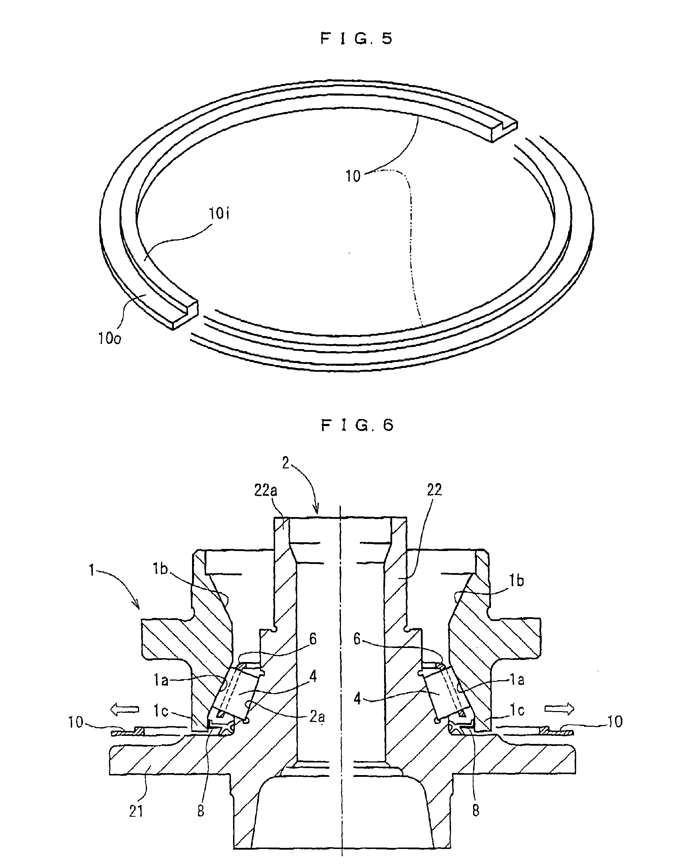

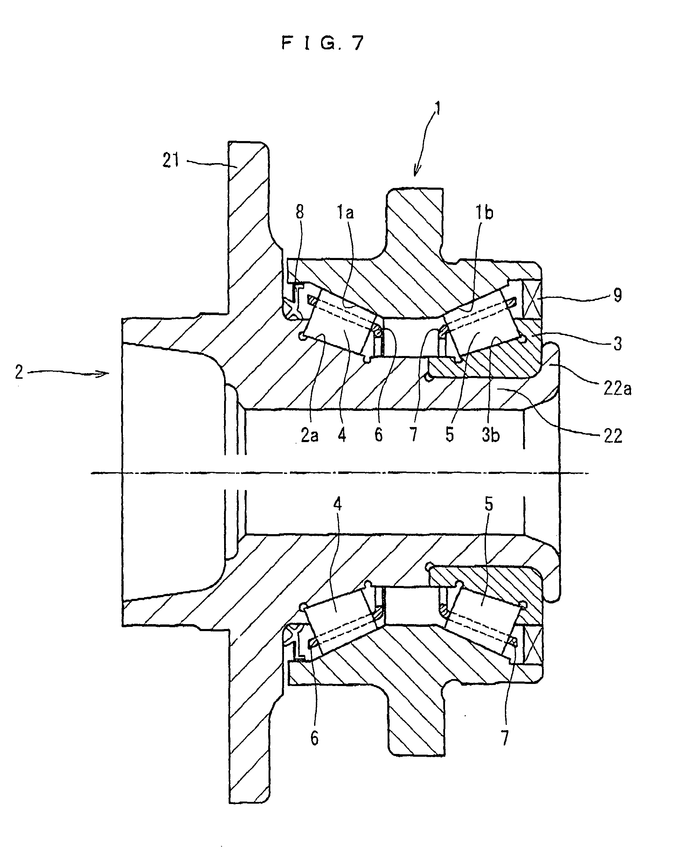

Hereinafter, a method of assembling a bearing device according to preferred embodiments of the present invention is described referring to Figs. 1 - 7. Figs. 1 - 3 and 6 are axially sectional views of the bearing devices respectively in different assembling states. Fig. 4 is an enlarged sectional view of a part A shown in Fig. 3. Fig. 5 is a perspective view of an annular spacer used in the process shown in Fig. 3. Fig. 7 is an axially sectional view of the bearing device after the assembling process is completed.

First, a constitution of the bearing device assembled by means of the assembling method according to the present preferred embodiment is described referring to Fig. 7. The bearing device comprises an outer ring 1 having raceways 1a and 1b, an inner shaft 2 having a raceway 2a and arranged to be coaxial with respect to the outer ring 1, first tapered roller 4 arranged between the raceway 2a of the inner shaft 2 and the raceway 1a of the outer ring 1 via a first retainer 6 on one-end side of the inner shaft 2, an inner ring 3 having a raceway 3a and externally mounted on a small-diameter section 22 of the inner shaft 2 on the other-end side thereof, and second tapered roller 5 arranged between the raceway 1b of the outer ring 1 and the raceway 3b of the inner ring 3 via a second retainer 7. annular seals 8 and 9 are respectively provided between one-end side of the outer ring 1 and the inner shaft 2 and between the other-end side of the outer ring 1 and the inner ring 3. The inner shaft 2 has a flange 21 for mounting a wheel on the one-end side thereof and the small diameter section 22 on the other-end side thereof.

The inner ring 3 is fixed to the inner shaft 2 as follows. After the inner ring 3 is pressed into the small diameter section 22 of the inner shaft 2, an end part 22a of the small diameter section 22 is caulked on an outer-diameter side or a nut is screwed into the end part of the small diameter section 22 so that the inner ring 3 is secured to the inner shaft 2.

The first annular seal B is constituted in such a manner that an elastic part 81 is firmly fixed to an annular core bar 82 as shown in Fig. 4. The elastic part 81 comprises an axial lip 81a, a main radial lip 81b and a sub radial lip 81c.

The first annular seal 8 is fitted to an inner peripheral surface of an endpart of the outer ring 1. In the first annular seal 8 thus attached to the outer ring 1, the axial lip 81a slidably contacts a side surface on an inner-side of the flange 21 of the .inner shaft 2 , and the main and sub radial lips 81b and 81c slidably contact an outer peripheral surface on the flange-21 side of the inner shaft 2.

Next, a method of assembling the bearing device thus constituted is described. First, the first annular seal 8 is arranged on the outer peripheral surface on the flang-21 side of the inner shaft 2 as shown in Fig. 1. In this state, the axial lip 81a of the first annular seal 8 contacts the inner side surface 21a of the flange 21 of the inner shaft 2, and the radial lips 81b and 81c contact an outer peripheral surface 2b of the inner shaft 2.

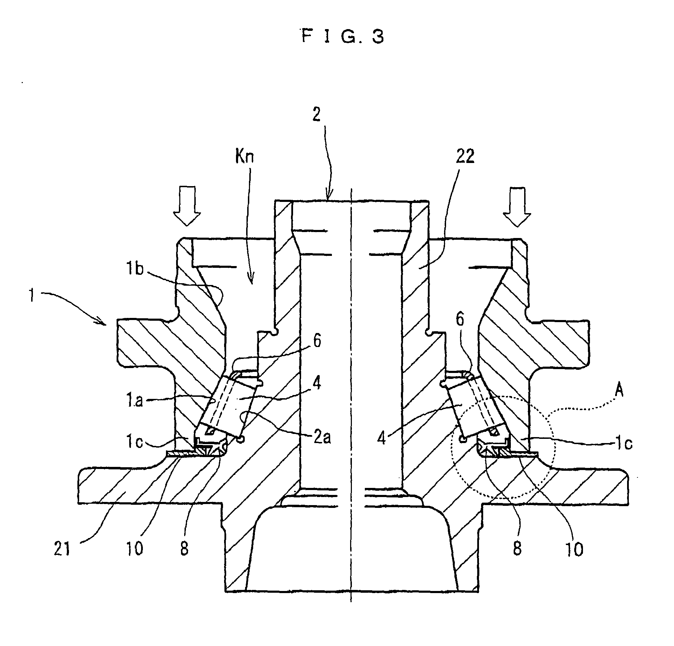

And then, the first tapered rollers 4 and the first retainer 6 are previously assembled, and the first tapered rollers 4 and the first retainer 6 thus assembled are arranged on the outer periphery of the raceway 2a of the inner shaft 2 as shown in Fig. 2.

By the arrangement work of the first annular seal 8, first tapered rollers 4 and first retainer 6 as described above, an inner shaft assembled body Kn comprising the inner shaft 2, first annular seal 8, first tapered rollers 4 and first retainer 6 is formed.

When the fist tapered rollers 4 and the first retainer 6 are assembled, the first retainer 6 is arranged in such a manner that an axial direction thereof is perpendicular and a large-diameter part thereof is on an upper side, and then, the first tapered rollers 4 are fitted one by one into a plurality of circumferential pockets provided in the first retainer 6 from the inner-diameter side.

When the assembled first tapered rollers 4 and fist retainer 6 are arranged on the outer periphery of the raceway 2a of the inner shaft 2, the first retainer 6 into which the first tapered rollers 4 are embedded is arranged so that the axial direction thereof is perpendicular and the large-diameter part thereof is on the upper side. Further, the inner shaft 2 is arranged so that an axial direction thereof is perpendicular and the flange 21 is on the upper side. Then, the inner shaft 2 whose flange part is on the upper side is inserted into an inner-peripheral side of the first retainer 6 from the upper direction, and the first tapered rollers 4 and the first retainer 6 are arranged on the outer periphery of the raceway 2a of the inner shaft 2.

In this arrangement state, the first tapered rollers 4 are received by the raceway 2a of the inner shaft 2 located on the inner-periphery side thereof. Further, a retainer with a conventional structure wherein the first tapered rollers 4 are held so as to prevent them from slipping out toward the outer-diameter side is used as the first retainer 6. Thereby, the first tapered rollers 4 do not slip out of the first retainer 6. Accordingly, it becomes possible to turn the inner shaft assembled body Kn in different directions and the like in the state where the first tapered rollers 4 are prevented from slipping out.

After the first tapered rollers 4 and the first retainer 6 are arranged on the outer periphery of the raceway 2a of the inner shaft 2, the top and bottom of the inner shaft assembled body Kn is reversed so as to rise so that the axial direction thereof is perpendicular and the flange 21 of the inner shaft 2 is on a lower side as shown in Fig. 3.

Next, after the outer ring 1 is arranged so that the axial direction thereof is perpendicular and the raceway 1a thereof is on the lower side, the outer ring 1 in this state is externally mounted on the outer periphery of the inner shaft assembled body Kn from the upper side of the inner shaft assembled body Kn (small-diameter-section-22 side) as shown in Fig. 3. At the time, an annular spacer 10 is sandwiched between the first annular seal 8 and the side surface on inward of the flange 21 of the inner shaft 2 in the inner shaft assembled body Kn.

The annular spacer 10 may be provided between the first annular seal 8 and the flange 21 at the stage when the first annular seal 8 is arranged around the base part of the flange 21 of the inner shaft 2, but the annular space 10 is provided between the first annular seal 8 and the flange 21 when it becomes necessary to use the annular spacer 10 in the present preferred embodiment.

The annular spacer 10 receives the core bar 82 of the first annular seal 8 and an end part 1c of the outer ring 1 across a substantially entire circumference thereof on the inner side surface of the flange 21 of the inner shaft 2. As shown in Figs. 4 and 5, an entire shape of the annular spacer 10 is annular, and the annular spacer 10 is constituted so as to be capable of splitting into a plurality of sections along a circumferential direction.

The annular spacer 10 has a radially inner-side part (hereinafter, referred to as inner-diameter part) 10i and a radially outer-side part (hereinafter, referred to as outer-diameter part 10o) respectively different in thickness. A step axially extending (vertical direction with respect to end surfaces of the parts 10i and 10o) is formed between the inner-diameter part 10i and the outer-diameter part 10o. The outer-diameter part 10o has an axial thickness To corresponding to a minimum set interval between the inner side surface of the flange 21 of the inner shaft 2 and the end surface of the outer ring end part 1c. The inner-diameter part 10i has a thickness Ti in which a thickness Ta corresponding to a dimension for insertion of the first annular seal 8 to the outer ring end part 1c is added to the thickness To (Ti = To + Ta).

In the annular spacer 10, the inner-diameter part 10i constitutes an annular part axially protruding in the direction toward the annular seal 8 (inner-diameter direction) due to the difference between the thickness of the large-diameter part 10o and the inner-diameter part 10i. An entire circumference of the protruding part (inner-diameter part 10i) supports an entire circumference of an outer-side surface 8a of the annular seal 8, and an entire circumference of the outer-diameter part 10o supports an entire circumference of the outer ring end part 1c. Further, an entire end surface of the annular spacer 10 located on an axially outer side thereof has a flat shape along the side surface of the flange 21.

In the annular spacer 10 thus constituted, the difference between the axial thickness Ti of the inner-diameter part 10i and the axial thickness Ti of the outer-diameter part 10o (Ti - To = Ta) is set to a design value of an axial distance between the outer ring end part 1c and the annular seal 8 so that the first annular seal 8 can be accurately attached to a position corresponding to the designed value.

By the insertion work of the first annular seal 8, the lips 81a, 81b and 81c of the first annular seal 8 fitted to the inner peripheral surface of the outer ring 1 slidably contact the side surface 21a of inward of the flange 21 with an appropriate contact pressure. The annular spacer 10 has a structure that can be circumferentially split into two sections in the shown example, and may be split into a larger number of sections than two.

Next, as shown in Figs. 3 and 4, the outer ring 1 is pressure-fitted to the inner shaft assembled body Kn so as to be assembled in the state where the annular spacer 10 is sandwiched between the first annular seal 8 and the flange 21. On a side of the outer-ring-end-surface-1c, the first annular seal 8 is supported by the inner-diameter part 10i of the annular spacer 10 at a position distant from the inner side surface of the flange 21. Therefore, the first annular seal 8 is consequently fitted like a press-insertion into the inner periphery of the outer ring end part 1c by pushing the outer ring 1 into and thereby attached to a position axially inserted by a predetermined dimension from the outer ring end part 1c.

Because the substantially entire circumference of the core bar 82 of the first annular seal 8 is supported by the inner-diameter part (protruding part) 10i of the annular spacer 10, a reaction force against press to the outer ring 1 equally acts on the entire circumference of the first annular seal 8. Thereby, the first annular seals 8 can be attached to the outer ring 1 without any tilt or distortion.

After the first annular seal 8 is attached to the end part 1c of the outer ring 1, the outer ring 1 is slightly lifted with respect to the inner shaft 2, and the clearance between inner side surface of the flange 21 of the inner shaft 2 and the end part 1c of the outer ring 1 is set to a dimension larger than the thickness Ti of the inner-diameter part 10i of the annular spacer 10. Thereby, as the annular spacer 10 does not get stuck with the end part 1c of the outer ring 1, the annular spacer 10 can be then split into the plurality of sections, and drawn radially outward and removed as shown in Fig. 6. The annular spacer 10 does not remain in the assembled body of the double row tapered roller bearing device and can be used again when a bearing device is newly assembled.

By doing so, the assembled body comprising the first tapered rollers 4 and the first retainer 6 is incorporated into between the raceway 1a of the outer ring 1 on one side and the raceway 2a of the inner shaft 2, and the first annular seal 8 is attached to the end part 1c of the outer ring 1.

Then, after the first annular seal 8 is attached to the outer ring end part 1c, the outer ring 1 is kept in the untouched state. So, an assembled body of the inner ring 3 comprising the inner ring 3, second tapered rollers 5 and second retainer 7 is produced by incorporating the second tapered rollers 5 into the outer periphery of the raceway 3b of the inner ring 3 via the second retainer 7.

The assembled body thus produced is arranged at the upper part of the small-diameter section 22 of the inner shaft 2 after an axial direction thereof is perpendicular and the second tapered rollers 5 face the raceway 1b of the outer ring 1. In this state, the inner ring 3 is pushed into the outer periphery of the small-diameter section 22, and the inner ring 3 is fixed to the small-diameter section 22 in such a manner that the end part 22a of the small-diameter section 22 is caulked or a nut is screwed into the end part of the small-diameter section 22.

Further, the second annular seal 9 is attached between the inner ring 3 and the other end of the outer ring 1. As a result, the bearing device shown in Fig. 7 can be obtained. The operation in this section is not shown because it is the same as that of the conventional assembling method.

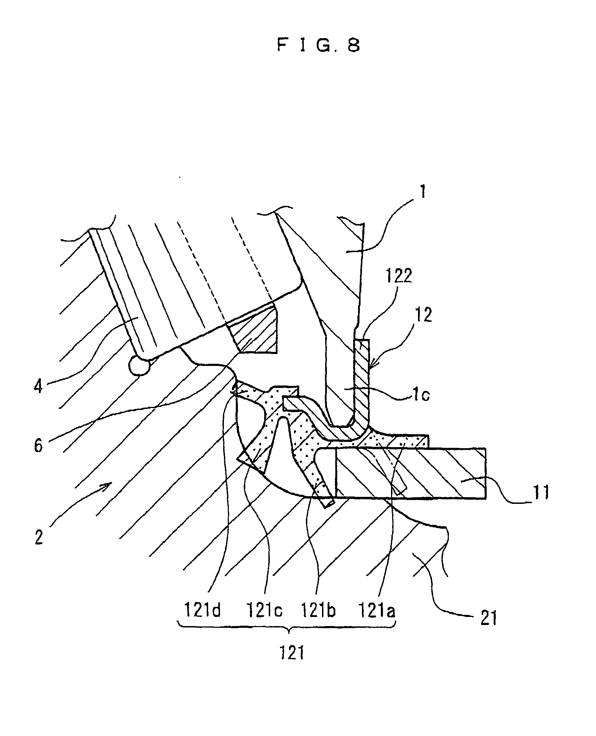

The assembling method according to the present invention can also be applied to attachment of an annular seal of such a type as fitted to the outer-peripheral side of the outer ring end part as shown in Fig. 8. Fig. 8 is an enlarged sectional view of a main part of a bearing device for describing an assembling method according to another preferred embodiment of the present invention.

In Fig. 8, an annular seal 12 according to the present preferred embodiment has an annular core bar 122 fitted to the outer ring end part 1c from the outer-peripheral side to the inner-peripheral side thereof. The annular core bar 122 has a cylindrical part 122a and a bent plate part 122b. The cylindrical part 122a has a cylindrical shape having a short dimension, and a dimension of an inner diameter thereof is set to a dimension substantially equal to the outer diameter of the outer ring end part 1c so that the cylindrical part 122a can be fitted into the outer peripheral surface of the outer ring end part 1c. The bent plate part 122b has an annular bent-plate shape and is integrally coupled with an end of the cylindrical part 122a. When the cylindrical part 122a is fitted to the outer ring end part 1c, an inner-diameter side of the bent plate part 122b protrudes toward the inner-diameter side of the outer ring end part 1c.

An elastic part 121 is fixed to a bent annular body 122b of the core bar 122 having the foregoing shape. The elastic part 121 has a main axial lip 121a, a sub axial lip 121b, a main radial lip 121c and a sub radial lip 121d.

An annular spacer 11 has an annular plate shape. An inner diameter dimension of the annular spacer 11 is set to a dimension substantially equal to the dimension of the inner diameter of the outer ring end part 1c so that the outer ring end part 1c can be received on the inner-diameter side of the annular spacer 11.

A method of attaching the annular seal 12 using the annular spacer 11 is described below. First, the main axial lip 121a is elastically deformed so that the annular spacer 11 is sandwiched between the axial lips 121a and 121b. In this state, the annular seal 12 is arranged on the outer peripheral surface on the flange-21 side of the inner shaft 2 so that a lower surface of the annular spacer 11 is received by the inner side surface 21a of the flange 21 of the inner shaft 2.

Next, the outer ring 1 is externally fitted on the outer periphery of the inner shaft 2 and pushed into the inner shaft 2. Thereby, the cylindrical part 122a of the annular core bar 122 is fitted into the outer peripheral surface of the end part 1c of the outer ring 1 so that the annular seal 12 is attached to the end part 1c of the outer ring 1. Thereafter, the outer ring 1 is slightly moved away from the inner shaft 2, and the annular spacer 11 is removed from the inner shaft 2.

The shown bearing device is used for a driving wheel, wherein a drift shaft is inserted through a bearing hole at the center of the inner shaft 2 and fixed thereto. The present invention can also be used for a driven wheel.

The shape of the annular space 11 is not limited to the foregoing shape. For example, in the case where the first annular seal 8 is attached to the end part of the outer ring so as to be flush with the end surface thereof, an annular spacer used in such a case may have a shape having a constant thickness in its inner and outer diameters.

## Claims

1. A method of assembling a bearing device comprising:
a raceway on an outer peripheral surface on one axial side thereof;
an inner shaft having a flange on the outer peripheral surface further toward the axial one side than the raceway;
an outer ring inserted with respect to the inner shaft from an axial other side thereof and having a raceway facing the raceway on an inner peripheral surface thereof at the insertion position; and
a plurality of tapered rollers arranged under free rotation between the raceways of the inner shaft and the outer ring, including:
a first step in which an annular seal is attached to the outer peripheral surface of the inner shaft on the flange side thereof, and the tapered rollers and a retainer for the tapered rollers are arranged in the raceway of the inner shaft so that an inner shaft assembled body comprising the annular seal, the tapered rollers and the retainer is formed;
a second step in which an annular spacer is arranged between the flange and the annular seal so as to support the annular seal and in such a manner as capable of being circumferentially split and removed;
a third step in which the outer ring is inserted with respect to the inner shaft from the axial other side via the annular seal until the outer ring abuts the flange of the inner shaft; and
a fourth step in which the annular spacer is split and removed from the bearing device.

2. The method of assembling a bearing device according to Claim 1, wherein
an inner diameter of the annular seal is smaller than a circumscribed circle diameter of the first tapered rollers.

3. The method of assembling a bearing device according to Claim 1, wherein
the tapered rollers and the retainer are arranged in the raceway of the inner shaft in a state where the inner shaft is axially perpendicular and the flange thereof is located on an upper side, and
the outer ring is attached to the inner ring in a state where the inner shaft is axially perpendicular and the flange thereof is located on a lower side.

4. The method of assembling a bearing device according to Claim 1, wherein
an axial thickness of a radially inner-side part of the annular spacer is larger than an axial thickness of a radially outer-side part thereof, and a flange-side end surface of the annular spacer has a flat-surface shape,
the flange-side end surface of the annular spacer is facing alongside a side surface of the flange,
the annular seal is supported by the radially inner-side part of the annular spacer, and
the outer ring is supported by the radially outer-side part of the annular seal.

5. The method of assembling a bearing device according to Claim 4, wherein
a difference between the axial thickness of the radially inner-diameter part and the axial thickness of the radially outer-diameter part is set to a design value of an axial estrangement distance between the end part of the outer ring and the annular seal.
